# EUROPÄISCHE PATENTSCHRIFT

(11) **EP 1 536 390 B1**
(45) Veröffentlichungstag und Bekanntmachung des Hinweises auf die Patenterteilung: **16.04.2008**
(21) Anmeldenummer: 04027543.0
(22) Anmeldetag: 19.11.2004
(51) Int. Cl.: G08B 5/38, A01K 27/00

(54) **Leucht-und Signalkörper**
Light and signal device
Dispositif d'éclairage et de signalisation

(30) Priorität: 21.11.2003 DE 20318106 U
(43) Veröffentlichungstag der Anmeldung: 01.06.2005
(73) Patentinhaber: Robert, Stahl, 92637 Weiden (DE)
(72) Erfinder: Stahl, Robert, 92637 Weiden i. d. Opf. (DE)
(74) Vertreter: Lang, Christian

(56) Entgegenhaltungen:
- EP-A2- 0 086 651
- GB-A- 2 172 724
- GB-A- 2 239 746
- GB-A- 2 254 992
- US-A- 5 074 251
- US-A- 5 523 927
- US-A1- 2003 030 560
- US-B1- 6 557 498

## Beschreibung

Die vorliegende Erfindung betrifft einen gegen Umwelteinflüsse unempfindlichen, insbesondere wasserdichten Leucht- und Signalkörper insbesondere zur Kennzeichnung von Menschen, Tieren oder sonstigen bewegten Gegenständen, wie Fahrrädern, im Dunkeln, vorzugsweise einen entsprechend beleuchteten Hundehalsring.

Aus Gründen der Verkehrssicherheit hat es sich in den letzten Jahren immer mehr durchgesetzt, dass die Kleidung mit entsprechenden Reflektoren oder besonders Kinder und Fahrradfahrer mit zusätzlichen Leuchtkörpern ausgestattet werden, um insbesondere die Verkehrssicherheit bei Dunkelheit zu erhöhen.

Insbesondere bei den Leucht- und Signalkörpem besteht ein Problem jedoch darin, dass einerseits eine ausreichende und möglichst umfassende Beleuchtung zur Verfügung gestellt werden soll, dass aber andererseits die Energieversorgung mit Batterien oder wiederaufladbaren Akkus nicht zu aufwändig sein darf, da ansonsten die Lade- oder Austauschzyklen der Akkus oder Batterien zu kurz oder das Gewicht für die Leucht- und Signalkörper durch die Anzahl der Batterien oder Akkus zu hoch wird.

Ein weiteres Problem mit derartigen Leucht- und Signalkörpem besteht darin, dass diese gegenüber Umwelteinflüssen, insbesondere Feuchte durch Regen und Schnee sowie Kälte und Schmutz empfindlich und somit störanfällig sind. Dies ist insbesondere auch ein Problem, wenn derartige Leucht- und Signalkörper für Tiere, wie z. B Hunde eingesetzt werden sollen, die in der Dunkelheit für den Straßenverkehr eine besondere Gefährdung darstellen oder selbst durch diesen gefährdet sind. Neben der ungenügenden Beständigkeit gegenüber Regen, Schnee, Feuchtigkeit, Kälte, Schmutz usw. sind Leucht- und Signalkörper für derartige Anwendungen oft auch nur gering mechanisch belastbar oder nur schlecht und unzuverlässig anzubringen. Ein weiterer großer Nachteil besteht darin, dass bekannte Leucht-und Signalkörper Schalter zum Ein- und Ausschalten aufweisen, die insbesondere Stellen für das Eindringen von Wasser und Schmutz darstellen und somit die Anfälligkeit des Gegenstands stark erhöhen.

Dieses Problem wurde in der US 5,074,251 bereits versucht dadurch zu lösen, dass ein entsprechendes Leuchthalsband mit einer Schutzhülle versehen worden ist. Allerdings weist das dort beschriebene Leuchthalsband weiterhin den Nachteil auf, dass durch einen Sehiebeschalter eine Schwachstelle für das Eindringen von Feuchtigkeit und Schmutz gegeben ist, was zum kompletten Ausfall des Leuchthalsbandes führen kann, wenn entsprechende Tiere mit dem Leuchthalsband sich beispielsweise in feuchtem Schmutz wälzen.

Es ist deshalb Aufgabe der vorliegenden Erfindung einen Leucht- und Signalkörper bereitzustellen, der die oben geschilderten Nachteile nicht aufweist, insbesondere robust für den täglichen Einsatz, insbesondere bei Tieren, vorzugsweise Hunden und dgl. ist. Darüber hinaus soll eine ausreichende, von allen Seiten erkennbare, Leuchtstärke bei akzeptablem Stromverbrauch bereitgestellt werden und die Vorrichtung soll in einfacher Weise und zuverlässig anbringbar und befestigbar sein. Ferner soll der Signal- und Leuchtkörper einfach herzustellen sein.

Diese Aufgabe wird gelöst durch einen Leucht- und Signalkörper mit den Merkmalen des Anspruchs 1. Vorteilhafte Ausgestaltungen sind Gegenstand der abhängigen Ansprüche.

Die vorliegende Erfindung zeichnet sich dadurch aus, dass innerhalb einer transparenten Schutzhülle eine Energieversorgung und mindestens eine, vorzugsweise mehrere Leuchtdioden, vorgesehen sind, die eine ausreichende Leuchtkraft zur Verfügung stellen, die insbesondere durch die transparente Schutzhülle noch diffus gestreut wird, so dass eine allseitig erkennbare Lichtstrahlung vorhanden ist. Vorzugsweise wird ein entsprechender Leucht-und Signalkörper als Ring, vorzugsweise für die Verwendung als Hundehalsring ausgeführt, der in einfacher Weise über den Kopf des Hundes gestülpt wird, ohne dass zusätzliche Befestigungen notwendig sind. Darüber hinaus sind weitere Anwendungen, z.B. an der Felge bzw. dem Reifen eines Fahrrads denkbar.

Die transparente Schutzhülle, die insbesondere wasserdicht ausgeführt ist, kann vorzugsweise aus transparentem, insbesondere farbig transparentem Kunststoff gebildet sein, da hiermit eine stabile, für die Leuchtzwecke geeignete und leicht zu verarbeitende Hülle gefertigt werden kann. Insbesondere hat es sich hierbei als vorteilhaft erwiesen einen gewebeverstärkten Kunststoff vorzusehen, der insbesondere für die Herstellung eines Leucht- und Signalrings in Form von Gewebeschlauch vorliegen kann.

Selbstverständlich können die transparenten Kunststoffe in vielfältiger Weise miteinander verbunden werden, beispielsweise durch Kleben, Verschweißen und dgl. Besonders vorteilhaft hat es sich jedoch erwiesen zur Herstellung eines Hundehalsrings zwei Teilringe aus transparentem Gewebeschlauch vorzusehen, die über entsprechende Verbindungsstücke, die in den Gewebeschlauch an den Enden eingesteckt werden können, über eine Steckverbindung miteinander verbunden werden. Zusätzlich kann dann über diese Verbindungsstellen ein elastischer Kunststoffschlauch wie z. B. ein Gummischlauch oder ein Silikonschlauch bzw. eine entsprechende elastische Muffe übergestülpt werden, wobei der Durchmesser der elastischen Muffe deutlich kleiner ist als der Gewebeschlauch der Teilringe, so dass durch die elastische Verformung eine dichte, insbesondere wasserdichte Anlage bei den Verbindungsstellen erreicht wird.

Als Energieversorgung können in vorteilhafter Weise Batterien oder wiederaufladbare Akkus eingesetzt werden, die insbesondere bei der Anwendung für einen Hundehalsring in einem der Teilringe, dem sog. Batterieschlauch aufgenommen ein können.

Um eine besonders gute Leuchtkraft bei langen Batterielaufzeiten zu erzielen, hat es sich bewährt, Hochleistungs-LED's, sog. Superflux, einzusetzen, die insbesondere einen sehr großen Abstrahlwinkel bis zu ca. 110° aufweisen, so dass der Leucht- und Signalkörper nahezu aus jeder Richtung zu erkennen ist.

Um die Batterielaufzeiten zu verlängern, ist es vorteilhaft, wenn in der elektronischen Anordnung des Leucht- und Signalkörpers, insbesondere in der Stromversorgung ein Leistungsbegrenzer, insbesondere in der Form eines elektronischen Strombegrenzers oder in Form einer Vorrichtung zur Absenkung der zur Verfügung gestellten Spannung, vorgesehen ist, so dass die LED's nur mit einem Bruchteil ihrer maximalen Nennleistung arbeiten, da dies die Lebensdauer der Batterien oder der aufladbaren Akkus erheblich verlängert. Vorzugsweise werden die LED's im Bereich von 5 bis 20 % ihrer Nennleistung, insbesondere mit ca. 10 % ihrer Nennleistung betrieben.

Als Leistungsbegrenzer kommt vorzugsweise eine Vorrichtung zur leistungsneutralen Absenkung der Spannung der Energieversorgung, also der Batterien oder Akkus oder ein elektronischer Strombegrenzer zur Anwendung.

Nach einer Ausführungsvariante umfasst der Leistungsbegrenzer Dioden, die zu einer Absenkung der von der Energieversorgung zur Verfügung gestellten Spannung führen, ohne dass es in Durchlassrichtung der Diode in dem Umfang der Spannungsreduzierung zu einem nennenswerten Stromfluss kommen würde. Entsprechend kann ein derartiger Leistungsbegrenzer einfach zwischen die Batterien bzw. die Batteriekontakte und die Batterien bzw. Akkus eingesetzt werden.

Vorzugsweise ist diese Art von Leistungsbegrenzer als auswechselbares Teil ausgeführt, welches mehrere Dioden aufweist, die antiparallel geschaltet sind, so dass je nach Einsetzrichtung des Leistungsbegrenzers aufgrund der unterschiedlichen Anzahl der Dioden in den verschiedenen antiparallelen Richtungen eine unterschiedliche Spannungsabsenkung erfolgt. Somit kann durch Wahl der Einsetzrichtung des Leistungsbegrenzers die von der Spannungsversorgung zur Verfügung gestellte Spannung variiert und somit die Leuchtkraft und die Lebensdauer der Batterien bzw. Akkus bestimmt werden.

Eine andere Art einer Leistungsbegrenzung kann durch die Bereitstellung einer entsprechenden Schaltung zur Strombegrenzung bereitgestellt werden. Bei einer derartigen Schaltung wird der Strom, der durch die LED's fließt durch das Wechselspiel zwischen zwei Transistoren und einem Widerstand so eingestellt, dass bei der gewünschten Stromstärke an dem Widerstand eine Spannung abfällt, die in etwa der Ansprechspannung des einen Transistors entspricht. Erhöht sich der Stromfluss durch den Widerstand, steigt die Spannung über die Ansprechspannung dieses Transistors und der Transistor beginnt einen Strom durch einen parallelen zu den LED's geschalteten Zweig zu leiten, so dass durch die damit verbundene Verringerung der Gate-Spannung des zweiten Transistors der Stromfluss durch die LED's begrenzt wird. Entsprechend kann durch eine Auswahl der Transistoren und des Widerstands ein bestimmter gleichmäßiger Strom durch die LED's eingestellt werden, und zwar unabhängig von der Ausgangsspannung.

Bei einer weiteren bevorzugten Ausführungsform weist der Leucht- und Signalkörper bzw. die entsprechende elektronische Anordnung eine automatische Ein- und Ausschaltvorrichtung auf, so dass auf die Ausbildung von Schaltern, insbesondere mechanischen Schaltern in der Schutzhülle gänzlich verzichtet werden kann, was wiederum die Beständigkeit des Leucht- und Signalkörpers gegenüber Umwelteinflüssen deutlich erhöht und die Betriebssicherheit steigert. Eine derartige automatische Ein- und Ausschaltvorrichtung kann beispielsweise einen Sensor bzw. einen Neigungs-, Bewegungs-, Infrarot- oder Temperatursensor umfassen, der entweder auf die Bewegungen oder die Körpertemperatur des Benutzers, beispielsweise eine Hundes, reagiert. Liefert der Sensor kein Signal, so würde sich der Leucht- und Signalkörper automatisch ausschalten, während er sich bei entsprechender Ermittlung eines Signals automatisch einschaltet.

Um zu verhindern, dass beispielsweise bei einem Bewegungssensor durch vorübergehenden Stillstand der Leucht- und Signalkörper sich in unerwünschter Weise ausschaltet, ist vorzugsweise eine Ausschaltverzögerung vorgesehen, die bewirkt, dass ein automatisches Ausschalten erst nach einer gewissen Übergangszeit erfolgt. So kann beispielsweise das Ausschalten erst nach einer Minute nach dem der Bewegungssensor keine Bewegung mehr ermittelt hat, erfolgen, wobei anzunehmen ist, dass ein Hund üblicherweise nicht länger als eine Minute völlig regungslos steht oder sitzt.

Die Verkabelung der Bauteile der elektronischen Anordnung, insbesondere der Anschluss der LED's verteilt über den Leucht- und Signalkörper, insbesondere entlang eines Rings, erfolgt vorzugsweise über Flachbandkabel, da diese eine besonders einfache Herstellung und Montage ermöglichen. Mit diesen Flachbandkabeln ist es nämlich möglich, die Bauteile und insbesondere die LED's in einer einfachen Steck-/Biege-Technik miteinander zu verbinden, wobei die Anschlussstifte der LED's einfach durch das Flachbandkabel gedrückt werden, um anschließend umgebogen zu werden. Auf diese Weise ist eine sichere und feste Verdrahtung ohne aufwändige Lötprozesse möglich.

Weitere Vorteile, Kennzeichen und Merkmale der vorliegenden Erfindung werden bei der nachfolgenden detaillierten Beschreibung zweier Ausführungsbeispiele anhand der beigefügten Zeichnungen deutlich.

Die Zeichnungen zeigen hierbei in rein schematischer Weise in
- **Fig. 1**: einen Querschnitt durch einen erfindungsgemäßen Hundehalsring;
- **Fig. 2**: eine Schaltskizze der elektronischen Anordnung aus Fig. 1;
- **Fig. 3**: ein Schaltbild für einen Begrenzer zur Verwendung mit dem Hundehalsring der Fig. 1
- **Fig. 4.**: ein alternatives Schaltbild für die elektrische Anordnung für die Ausführungsform gemäß Fig. 1; und in
- **Fig. 5**: ein weiteres alternatives Schaltbild für die elektrische Anordnung für die Ausführungsform gemäß Fig. 1.

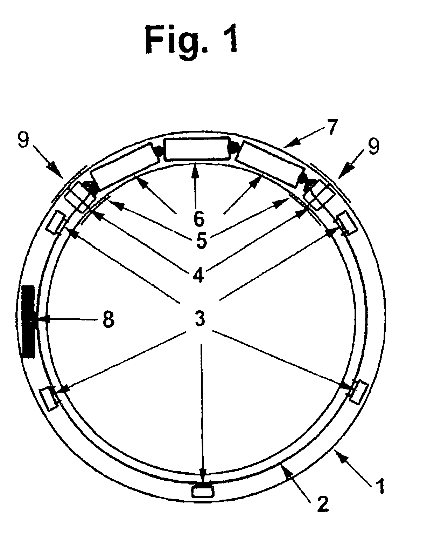

In Fig. 1 ist eine Schnittansicht durch einen Hundehalsring gezeigt, der aus einem ersten Teilring 1 und einem mit dem ersten Teilring 1 durch Steckverbindungen 9 verbindbaren zweiten Teilring 7 gebildet ist.

Die beiden Teilringe 1 und 7 sind jeweils aus einem Schlauch hergestellt, in deren Enden die Verbindungssteckstücke 4 zum gegenseitigen Verbinden der Teilringe 1 und 7 eingesetzt werden können. Teilring 1 ist hierbei insbesondere als transparenter Gewebeschlauch ausgebildet.

Darüber hinaus werden die Teilringe 1 und 7 durch zwei Gummi- bzw. Silikonschläuche 5 verbunden bzw. an den Verbindungsstellen 9 abgedichtet. Die beiden Gummi- bzw. Silikonschläuche 5 weisen einen geringeren Durchmesser als die Teilringe 1 und 7 aus vorzugsweise Gewebeschlauch auf, so dass aufgrund der elastischen Dehnung der Gummi- bzw. Silikonschläuche 5 eine dichtende Anlage der Gummi- bzw. Silikonschläuche 5 an die Teilringe 1 und 7 an den Verbindungsstellen 9 erfolgt.

In dem Teilring 7, der auch als Batterieschlauch oder Batterie-Teilring bezeichnet werden kann, sind mehrere Batterien 6 oder wiederaufladbare Akkumulatoren (Akkus) angeordnet, die der Energieversorgung dienen. Im gezeigten Ausführungsbeispiel der Fig. 1 sind drei Batterien 6 in dem Teilring 7 hintereinander angeordnet.

Im Teilring 1, der auch als LED-Teilring bezeichnet werden kann, befindet sich die elektronische Anordnung des beleuchteten Hundehalsrings der Fig. 1 mit mehreren Leuchtdioden (LED) 3, die über Flachkabel bzw. Flachbandkabel 2 miteinander und mit der Baugruppe 8 sowie den Verbindungsstücken 4 verbunden sind. An den Verbindugsstücken 4 ist das Flachbandkabel 2 mit Batteriekontakten verbunden, die wiederum beim Zusammenstecken des Hundehalsrings aus den Teilringen 1 und 7 in Kontakt mit den Batterien 6 des Batterie-Teilrings 7 gelangen. Vorzugsweise können für die Batteriekontakte auch entsprechende Federelemente gewählt werden, die durch ihre elastische Verformung beim Zusammenstecken eine ausreichende Kontaktierung gewährleisten.

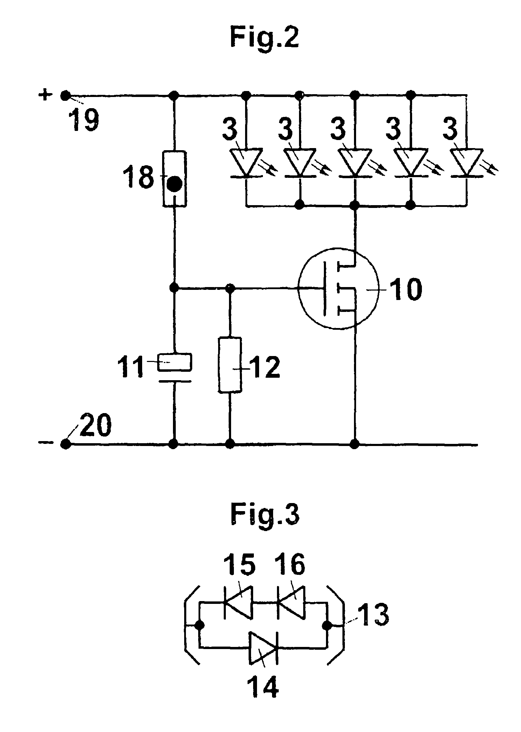

Die Baugruppe 8, die in der Fig. 1 lediglich schematisch dargestellt ist, umfasst die Komponenten des Schaltkreises mit Ausnahme der Leuchtdioden 3, welcher in Fig. 2 dargestellt ist.

Wie dem Schaltkreis der Fig. 2 zu entnehmen ist, weist die elektrische Anordnung des beleuchtbaren Hundehalsringes eine elektrische Stromversorgung in Form des Batterieschlauchs 7 auf, die ihre elektrische Energie über die Batteriekontakte bzw. die Pole 19 und 20 der Fig. 2 in den Schaltkreis einspeist. Wie in Fig. 2 zu sehen ist, ist der erste Pol 19 der Stromversorgung der Pluspol und zweite Pol 20 der Stromversorgung der Minuspol.

Die LED's 3, die gleichmäßig verteilt in dem Hundehalsring bzw. dem LED-Teilring 1 des Hundehalsrings angeordnet sind, sind zueinander parallel geschaltet und mit einem ihrer Anschlüsse mit dem Pluspol 19 der Stromversorgung verbunden. Die LED's 3, die vorzugsweise als möglichst weitwinkelig abstrahlende LED's gewählt werden können, leuchten, wenn der Transistor 10 auf Durchlass geschaltet ist. Der vorzugsweise als Feldeffekttransistor, beispielsweise der Bauart BSN 10 A oder BS170, ausgebildete Transistor 10 wird über einen Sensor 18, beispielsweise einen Neigungssensor, einen Bewegungssensor oder auch einen Infrarot- oder Temperatursensor, der beispielsweise die Temperatur des Hundes erfasst, geschaltet. Wenn durch den Sensor 18 an der Basis des Transistors 10 eine entsprechende (positive) Spannung anliegt, kann Strom vom Pluspol 19 über die LED's und den Kollektor des Transistors 10 zum Emitter des Transistors 10 und zum Minuspol 20 fließen.

Um zu vermeiden, dass der Leuchthalsring automatisch abgeschaltet wird, wenn der Hund ruhig steht und somit der Sensor 18 beispielsweise als Bewegungssensor keine Bewegung erfasst, ist ein Kondensator 11 und ein Widerstand 12 parallel zueinander zwischen der Basis des Transistors 10 und dem Minuspol 20 angeordnet. Somit kann der Kondensator 11 für den Fall, dass der Sensor kein Signal erfasst, über den Widerstand 12 langsam entladen werden und die Basis im Transistor 10 weiter in Durchlassrichtung schalten, so dass die LED's 3 erst nach dem Entladen des Kondensators 11 verlöschen. Der Kondensator kann eine Kapazität von üblicherweise 47 µ.
F aufweisen, während der Widerstand sehr hochohmig mit 1 MΩ gewählt wird. Die Betriebsspannung für dieses gewählte Schaltungsbeispiel kann beispielsweise im Bereich von 3 V bzw. 4,5 V liegen.

Da vorzugsweise für die LED's 3 Hochleistungs-LED's, sog. Superflux, gewählt werden, können diese zur Verlängerung der Batterielebensdauer oder Akkuentladezeit bei einem Bruchteil ihres Leistungsvermögens betrieben werden, um immer noch ausreichend Leuchtkraft zur Verfügung zu stellen. Beispielsweise können die LED's im Bereich von 10 % ihrer nominalen Leistung betrieben werden.

Um dies zu erreichen, kann beispielsweise ein Begrenzer 13, wie in Fig. 3 schematisch in einem Schaltbild dargestellt, zwischen den Polen 19 und 20 der Spannungsversorgung der Fig. 2, also zwischen den Batterien 6 und dem Batteriekontakt des Verbindungsstücks 4, gemäß Fig. 1, eingesetzt werden. Der Begrenzer 13, gemäß Fig. 3, weist insgesamt drei Dioden 14 bis 16 auf, wobei zwei Dioden 15 und 16 antiparallel zur dritten Diode 14 geschaltet sind. Auf diese Weise kann beispielsweise die Spannung, die durch die Batterien 6 zur Verfügung gestellt wird, in der einen Richtung um beispielsweise 0,7 V und in der anderen Richtung um 1,4 V abgesenkt werden, je nach dem in welcher Richtung der Begrenzer eingesetzt wird. Entsprechend ist der Begrenzer 13 als einsetzbares Teil ausgebildet, welches leicht aus dem Hundehalsring entnommen werden kann und je nach Wunsch in der einen oder anderen Richtung eingelegt wird. Durch die verminderte Spannung ergibt sich eine verminderte Leistungsaufnahme der Leuchtdioden und die Lebensdauer der Batterien oder der aufladbaren Akkus wird entsprechend verlängert.

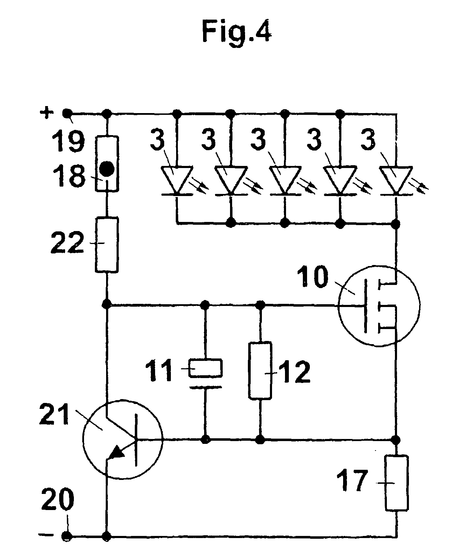

Eine Alternative der elektrischen Schaltungsanordnung für einen Hundehalsring gemäß Fig. 1 ist in der Fig. 4 dargestellt.

Zur Erzielung einer gleichmäßigen Helligkeit der LED's und einer möglichst langen Lebensdauer der Batterien bzw. Akkus ist diese Schaltung, die ansonsten identisch zur Schaltung der Fig. 2 ausgeführt ist, um einen Transistor 21 und einen Widerstand 17 sowie einen weiteren Widerstand 22 ergänzt.

Der Transistor 21 ist über den Widerstand 22 mit seinem Kollektor mit dem Bewegungssensor 18 verbunden, während der Emitter an den Minuspol 20 angeschlossen ist. Die Basis des Transistors 21 ist einerseits mit den parallel zueinandergeschalteten Kondensator 11, Widerstand 12 und dem Emitter (Source) des Transistors 10 sowie andererseits über den Widerstand 17 mit dem Minuspol 20 verbunden. Erreicht bei dieser Schaltungsanordnung, gemäß der Fig. 4, der Strom, der durch die LED's 3 und den Widerstand 17 fließt, eine bestimmt Höhe, so stellt sich an der Basis des Transistors 21 eine bestimmte Spannung ein, die den Transistor 21 auf Durchlass schaltet. Auf diese Weise wird ein Teil des Stroms über den Widerstand 22 und den Transistor 21 fließen, so dass die Spannung an der Basis (Gate) des Transistors 10 verändert wird und entsprechend der Stromfluss durch den Feldeffekttransistor 10 und somit die LED's 3 reduziert wird. Dadurch wird wiederum die Spannung am Transistor 21 über den Widerstand 17 beeinflusst, so dass durch entsprechende Auswahl der verschiedenen Widerstände und Transistoren ein bestimmter Stromfluss durch die LED's in engen Grenzen geregelt werden kann. Durch diese Strombegrenzung wird ebenfalls erreicht, dass die Batterielaufzeit erhöht und die Helligkeit der LED's vergleichmäßigt wird.

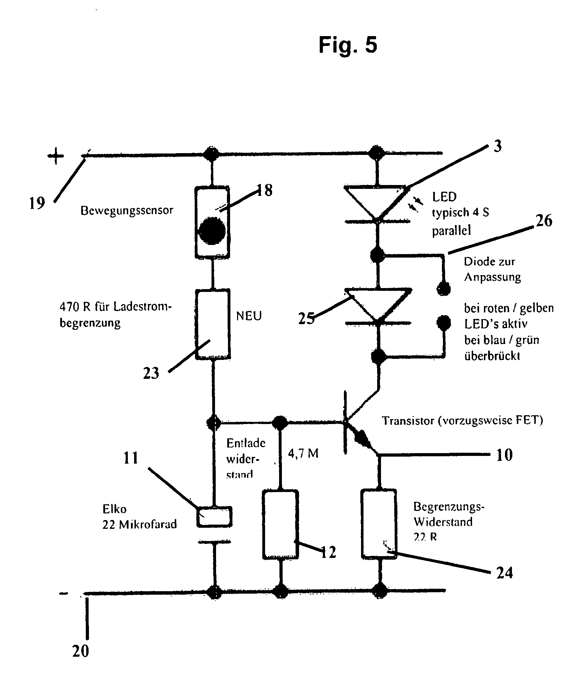

Eine weitere Ausführungsform einer elektrischen Schaltung für den erfindungsgemäßen Leuchtkörper ist in Fig. 5 gezeigt. Diese entspricht weitgehend derjenigen aus Fig. 2. Zusätzlich aufgenommen sind zwei Begrenzungswiderstände 23 und 24 sowie eine Anpassungsdiode 25 und eine parallel dazu geschaltete Überbrückung 26, die bei blauen oder grünen LED's kurz geschlossen wird, während bei roten oder gelben LED's die Überbrückung 26 unterbrochen und die Anpassungsdiode 25 aktiv ist. Damit können die unterschiedlichen Spannungen zwischen roten / gelben und blauen / grünen / türkisfarbenen LED's über die Diode angepasst werden, wenn die Lötbrücke offen oder geschlossen ist.

Der erste Begrenzungswiderstand 23 ist in Reihe zum Bewegungssensor 18 geschaltet und wird beispielsweise durch einen 470 Ohm-Widerstand gebildet, der die Spitzenströme zum Kondensatur begrenzt und die Lebensdauer des Sensors verlängert, während der zweite Begrenzungswiderstand 24 zwischen Emitter des Transistors 10 und dem Minuspol 20 angeordnet ist.

Für die Anwendung im Fahrrad kann der Bewegungsschalter durch einen Reed-Kontakt ersetzt werden. Ähnlich dem Fahrrad-Tacho-Prinzip schließt ein Magnet an der Fahrradgabel den Kontakt bei jeder Umdrehung und lädt damit den Kondensator, der wiederum über den Transistor die LED's leuchten lässt.

## Patentansprüche

1. Gegen Umwelteinflüsse unempfindlicher, insbesondere wasserdichter Leucht- und Signalkörper insbesondere zur Kennzeichnung von Menschen, Tieren oder sonstigen bewegten Gegenständen im Dunkeln, vorzugsweise als Hundehalsring mit einer transparenten Schutzhülle (1) und einer in der Schutzhülle vorgesehenen elektronischen Anordnung mit mindestens einer vorzugsweise mehreren Leuchtdioden (LED) (3) und einer Energieversorgung (6),
**dadurch gekennzeichnet, dass**
eine automatische Ein- und Ausschaltvorrichtung (18) vorgesehen ist, die einen Sensor umfasst, der auf die Bewegungen oder Temperatur des mit Leucht- oder Signalkörpers **gekennzeichnet**en Menschen, Tier oder sonstigem bewegtem Gegenstand reagiert.

2. Leucht- und Signalkörper nach Anspruch 1,
**dadurch gekennzeichnet, dass**
die Schutzhülle (1) transparenten, insbesondere farbig transparenten Kunststoff umfasst, insbesondere gewebeverstärkten Kunststoff, vorzugsweise in Form von Gewebeschlauch und/oder Silikonschlauch, vorzugsweise zwei Teilringe und zwei Steckverbinder und/oder zwei Dichtschläuche.

3. Leucht- und Signalkörper nach Anspruch 1 oder 2,
**dadurch gekennzeichnet, dass**
die Energieversorgung (6) eine oder mehrere Batterien oder wiederaufladbare Akkus umfasst.

4. Leucht- und Signalkörper nach einem der vorhergehenden Ansprüche,
**dadurch gekennzeichnet, dass**
die Leuchtdioden (3) Hochleistungs-LED's (Superflux) sind.

5. Leucht- und Signalkörper nach einem der vorhergehenden Ansprüche,
**dadurch gekennzeichnet, dass**
die elektronische Anordnung einen Leistungsbegrenzer (13), insbesondere eine vorrichtung zur Spannungsreduzierung der Energieversorgung und/oder einen vorzugsweise elektronischen Strombegrenzer für die LED's umfasst, so dass die LED's nur mit einem Teil ihrer maximalen Leistung, insbesondere im Bereich von 5 bis 20 % ihrer Nennleistung, höchst vorzugsweise mit ca. 10 % ihrer Nennleistung betrieben werden.

6. Leucht- und Signalkörper nach einem der vorhergehenden Ansprüche,
**dadurch gekennzeichnet, dass**
die automatische Ein- und Ausschaltvorrichtung einen Neigungs- oder Bewegungssensor umfasst.

7. Leucht- und Signalkörper nach einem der vorhergehenden Ansprüche, **dadurch gekennzeichnet, dass**
die automatische Ein- und Ausschaltvorrichtung eine Ausschaltverzögerung aufweist.

8. Leucht- und Signalkörper nach einem der vorhergehenden Ansprüche,
**dadurch gekennzeichnet, dass**
die elektronische Anordnung folgende Bauteile umfasst
- mehrere LED's (3),
- mindestens einen Sensor (18),
- mindestens einen ersten Transistor (10), insbesondere Feldeffekttransistor,
- mindestens einen ersten Widerstand (12),
- mindestens einen Kondensator (11),
wobei die LED's zueinander parallel geschaltet sind und mit einem ihrer Anschlüsse an einem ersten Pol der Stromversorgung angeschlossen sind, während der andere ihrer Anschlüsse mit dem Kollektor (Drain) des ersten Transistors verbunden ist, wobei der Emitter (Source) des ersten Transistors wiederum mit dem zweiten Pol der Stromversorgung verbunden ist, so dass die LED's nur leuchten, wenn der erste Transistor über die Basis (Gate) leitend geschaltet ist, und wobei zwischen dem ersten Pol der Stromversorgung und der Basis des Transistors der Sensor als Schaltelement und zwischen dem zweiten Pol der Stromversorgung und der Basis des ersten Transistors der Kondensator und der Widerstand parallel zueinander geschaltet als Ausschaltverzögerung vorgesehen sind.

9. Leucht- und Signalkörper nach Anspruch 8,
**dadurch gekennzeichnet, dass**
ein zweiter Transistor (21) vorgesehen ist, der zusammen mit einem zweiten Widerstand (17) im Zusammenspiel mit dem ersten Transistor den Stromfluss durch die LED's regelt, wobei der Kollektor des zweiten Transistors über einen dritten Widerstand (22) an dem Sensor angeschlossen ist und der Emitter des zweiten Transistors mit dem zweiten Pol der Stromversorgung verbunden ist, und wobei die Basis des zweiten Transistors über einen Widerstand ebenfalls mit dem zweiten Pol der Stromversorgung und mit den zueinander parallel geschalteten Kondensator, erstem Widerstand und Emitter (Source) des ersten Transistors verbunden ist.

10. Leucht- und Signalkörper nach Anspruch 5,
**dadurch gekennzeichnet, dass**
der Leistungsbegrenzer (13) Dioden (14, 15, 16) umfasst, wobei vorzugsweise der Leistungsbegrenzer als auswechselbares Teil mit unterschiedlicher Anzahl von Dioden in unterschiedlicher Durchgangsrichtung versehen ist, so dass je nach Einbaurichtung eine unterschiedliche Leistungsbegrenzung durch unterschiedliche Spannungsreduzierung erfolgt.

11. Leucht- und Signalkörper nach einem der vorhergehenden Ansprüche,
**dadurch gekennzeichnet, dass**
zur Verbindung der Bauteile der elektronischen Anordnung Flachbandkabel (2) vorgesehen sind, die vorzugsweise in Steck- /Biege - Technik mit den Bauteilen, insbesondere den LED's verbunden werden.

12. Leucht- und Signalkörper nach einem der vorhergehenden Ansprüche,
**dadurch gekennzeichnet, dass**
der Leucht- und Signalkörper als Ring ausgebildet ist, der in einen Batterie- oder Akkuteilring (7) und einen LED-Teilring (1) unterteilt ist, wobei beide Teilringe durch Steckverbindungen (4) miteinander verbunden sind und die Steckverbindungen durch elastisch dehnbare Muffen (5), insbesondere aus Gummi oder Silikon, abgedichtet sind.

## Claims

1. Light and signal body, insensitive to environmental influences, and especially watertight, especially for the identification of people, animals or other moving objects in the dark, preferably as a dog collar, with a transparent protective shell (1) containing electronics with at least one, preferably several light-emitting diodes (LEDs) (3) and a power supply (6),
**characterised by the fact that**
an automatic on/off device (18) is provided, comprising a sensor that responds to the movements or temperature of the person, animal or other moving object wearing the light and signal body.

2. Light and signal body in accordance with claim 1,
**characterised by the fact that**
the protective shell (1) comprises transparent, especially transparent coloured plastic, especially fabric-reinforced plastic, preferably in the form of flexible fabric tubing and/or silicone tubing, preferably two sub-rings and two plug connectors and/or two sealing tubes.

3. Light and signal body in accordance with claim 1 or 2,
**characterised by** the fact that
the power supply (6) comprises one or more batteries or rechargeable batteries.

4. Light and signal body in accordance with any of the previous claims,
**characterised by the fact that**
the light-emitting diodes (3) are high-performance LEDs (Superflux).

5. Light and signal body in accordance with any of the previous claims,
**characterised by the fact that**
the electronics comprises an output limiter (13), especially a device to reduce the voltage of the power supply and/or a preferably electronic current limiter for the LEDs, such that the LEDs are operated at only a part of their maximum capacity, in particular in the range of 5 to 20% of their nominal capacity, most preferably at approximately 10% of their nominal capacity.

6. Light and signal body in accordance with any of the previous claims,
**characterised by** the fact that
the automatic on/off device comprises a tilting or motion sensor.

7. Light and signal body in accordance with any of the previous claims,
**characterised by the fact that**
the automatic on/off device has a power-off delay.

8. Light and signal body in accordance with any of the previous claims,
**characterised by the fact that**
the electronics comprises the following components several LEDs (3),
at least one sensor (18),
at least a first transistor (10), especially a field effect transistor,
at least a first resistance (12),
at least one capacitor (11),
wherein the LEDs are connected in parallel to each other and one of their connectors is connected to a first terminal of the power supply, while the other of their connectors is connected to the drain of the first transistor, wherein the source of the first transistor is, in turn, connected to the second terminal of the power supply, such that the LEDs light up only when the first transistor is conducting via the gate, and wherein the sensor is provided as switching element between the first terminal of the power supply and the gate of the transistor, and the capacitor and the resistance are connected in parallel between the second terminal of the power supply and the gate of the first transistor as power-off delay.

9. Light and signal body in accordance with claim 8,
**characterised by the fact that**
a second transistor (21) is provided, which, along with a second resistance (17) in interaction with the first transistor, regulates the current flow through the LEDs,
wherein the drain of the second transistor is connected to the sensor via a third resistance (22), and the source of the second transistor is connected to the second terminal of the power supply, and wherein the gate of the second transistor is also connected via a resistance to the second terminal of the power supply and to the capacitor, first resistance and source of the first transistor connected in parallel to each other.

10. Light and signal body in accordance with claim 5,
**characterised by the fact that**
the output limiter (13) comprises diodes (14, 15, 16), wherein preferably the output limiter as an exchangeable part is provided with a different number of diodes with different forward current, such that, depending on the installation direction, different power limitation is effected by different voltage reduction.

11. Light and signal body in accordance with any of the previous claims,
**characterised by the fact that**
for the purpose of connecting the electronics components, strip cables (2) are provided, which are preferably connected to the components, especially the LEDs, by stick-bend technology.

12. Light and signal body in accordance with any of the previous claims,
**characterised by the fact that**
the light and signal body is shaped as a ring, which is subdivided into a battery or rechargeable battery sub-ring (7), and an LED sub-ring (1), wherein the two sub-rings are connected to each other through connectors (4) and the connectors are sealed by stretchable elastic sleeves (5), especially of rubber or silicone.

## Revendications

1. Dispositif d'éclairage et de signalisation insensible aux influences de l'environnement, en particulier imperméable à l'eau, destiné en particulier au repérage de personnes, d'animaux ou d'autres objets en mouvement dans l'obscurité, de préférence sous forme de collier de chien, comportant une enveloppe protectrice (1) transparente et un système électronique prévu dans l'enveloppe protectrice avec au moins une, de préférence plusieurs diodes électroluminescentes (DEL) (3) et une alimentation en énergie (6), **caractérisé en ce qu'**un dispositif de marche/arrêt automatique (18) est prévu, qui comprend un capteur qui réagit aux mouvements ou à la température de la personne, de l'animal ou de l'autre objet en mouvement repéré avec le dispositif d'éclairage et de signalisation.

2. Dispositif d'éclairage et de signalisation selon la revendication 1, **caractérisé en ce que** l'enveloppe protectrice (1) comprend une matière synthétique transparente, en particulier transparente colorée, en particulier une matière synthétique renforcée par un tissu, de préférence sous la forme d'un flexible en tissu et/ou d'un flexible en silicone, de préférence deux parties d'anneau et deux connecteurs et/ou deux flexibles d'étanchéité.

3. Dispositif d'éclairage et de signalisation selon la revendication 1 ou 2, **caractérisé en ce que** l'alimentation en énergie (6) comprend une ou plusieurs batteries ou accumulateurs rechargeables.

4. Dispositif d'éclairage et de signalisation selon l'une quelconque des revendications précédentes, **caractérisé en ce que** les diodes électroluminescentes (3) sont des DEL haute puissance (Superflux).

5. Dispositif d'éclairage et de signalisation selon l'une quelconque des revendications précédentes, **caractérisé en ce que** le système électronique comprend un limiteur de puissance (13), en particulier un dispositif destiné à la réduction de tension de l'alimentation en énergie et/ou un limiteur de courant de préférence électronique pour les DEL, de manière à ce que les DEL ne soient actionnées qu'avec une partie de leur puissance maximale, en particulier dans la gamme comprise entre 5 et 20 % de leur puissance nominale, de préférence au maximum avec environ 10 % de leur puissance nominale.

6. Dispositif d'éclairage et de signalisation selon l'une quelconque des revendications précédentes, **caractérisé en ce que** le dispositif de marche/arrêt automatique comprend un capteur d'inclinaison ou de mouvement.

7. Dispositif d'éclairage et de signalisation selon l'une quelconque des revendications précédentes, **caractérisé en ce que** le dispositif de marche/arrêt automatique présente un retard à la coupure.

8. Dispositif d'éclairage et de signalisation selon l'une quelconque des revendications précédentes, **caractérisé en ce que** le système électronique comprend les composants suivants :
- plusieurs DEL (3);
- au moins un capteur (18) ;
- au moins un premier transistor (10), en particulier un transistor à effet de champ ;
- au moins une première résistance (12) ;
- au moins un condensateur (11) ;
les DEL étant branchées en parallèle les unes aux autres et étant raccordées avec une de leurs bornes à une première borne polaire de l'alimentation en courant, tandis que leur autre borne est reliée avec le collecteur (drain) du premier transistor, l'émetteur (source) du premier transistor étant à son tour relié à la seconde borne polaire de l'alimentation en courant, de manière à ce que les DEL ne soient allumées que lorsque le premier transistor est branché de façon conductrice par l'intermédiaire de la base (portillon), et le capteur étant prévu sous forme d'élément de commutation entre la première borne polaire de l'alimentation en courant et la base du transistor du capteur et le condensateur ainsi que la résistance étant prévus branchés en parallèle l'un à l'autre sous forme de retard à la coupure entre la seconde borne polaire de l'alimentation en courant et la base du premier transistor.

9. Dispositif d'éclairage et de signalisation selon la revendication 8, **caractérisé en ce qu'**un second transistor (21) est prévu, qui régule le flux de courant à travers les DEL conjointement avec une deuxième résistance (17) en interaction avec le premier transistor, le collecteur du second transistor étant raccordé au capteur par l'intermédiaire d'une troisième résistance (22) et l'émetteur du second transistor étant relié à la seconde borne polaire de l'alimentation en courant et la base du second transistor étant également reliée à la second borne polaire de l'alimentation en courant et au condensateur, la première résistance ainsi que l'émetteur (source) du premier transistor, branchés en parallèle les uns aux autres, par l'intermédiaire d'une résistance.

10. Dispositif d'éclairage et de signalisation selon la revendication 5, **caractérisé en ce que** le limiteur de puissance (13) comprend des diodes (14, 15, 16), le limiteur de puissance étant de préférence prévu sous forme de partie interchangeable avec un nombre différent de diodes dans divers sens de passage, de manière à ce qu'une limitation de puissance différente soit effectuée via une réduction de tension différente suivant le sens de montage.

11. Dispositif d'éclairage et de signalisation selon l'une quelconque des revendications précédentes, **caractérisé en ce que** des câbles plats (2) sont prévus en vue de la liaison des composants du système électronique, lesdits câbles plats étant reliés aux composants, en particulier les DEL, de préférence selon la technique d'enfichage / flexion.

12. Dispositif d'éclairage et de signalisation selon l'une quelconque des revendications précédentes, **caractérisé en ce que** ledit dispositif d'éclairage et de signalisation est conçu sous forme d'anneau qui est subdivisé en une partie d'anneau batterie ou accumulateur (7) et une partie d'anneau DEL (1), les deux parties d'anneau étant reliées ensemble par des connexions à fiches (4) et lesdites connexions à fiches étant étanchéifiées grâce à des manchons élastiques (5), en particulier en caoutchouc ou en silicone.
